# FASCICULE DE BREVET EUROPEEN

(11) **EP 1 993 945 B1**
(45) Date de publication et mention de la délivrance du brevet: **29.12.2010**
(21) Numéro de dépôt: 07730954.0
(22) Date de dépôt: 09.02.2007
(51) Int. Cl.: B65G 47/256, B67B 1/00

(54) **CONVOYEUR MUNI D'UN DISPOSITIF DE SEPARATION DE BOUCHONS MAL ORIENTES**
MIT EINER VORRICHTUNG ZUM TRENNEN VON FEHLAUSGERICHTETEN KAPPEN AUSGESTATTETE FÖRDEREINRICHTUNG
CONVEYOR EQUIPPED WITH A DEVICE FOR SEPARATING MISALIGNED CAPS

(30) Priorité: 20.02.2006 FR 0650592
(43) Date de publication de la demande: 26.11.2008
(73) Titulaire: Sidel Participations (Societé par Actions Simplifiée), 76930 Octeville Sur Mer (FR)
(72) Inventeur: LORANGE, Stéphane, 76930 Octeville-sur-Mer (FR); ROTH, Emmanuel, 76930 Octeville-sur-Mer (FR); NONNENMACHER, Raphaël, 76930 Octeville-sur-Mer (FR)
(74) Mandataire: Nuss, Pierre
(86) Numéro de dépôt international: PCT/FR2007/000240
(87) Numéro de publication internationale: WO 2007/096496

(56) Documents cités:
- US-A- 2 758 434
- US-A- 4 699 261

## Description

La présente invention concerne le domaine de la fabrication de contenants pour le conditionnement de liquides, en particulier de liquides alimentaires, notamment dans de contenants du type bouteille en matière synthétique ou en verre munie d'un bouchon de fermeture en matière synthétique, et a pour objet un convoyeur muni d'un dispositif de séparation de bouchons mal orientés.

Les bouchons de fermeture de bouteilles sont généralement nettoyés, préalablement à leur mise en place sur les bouteilles, puis sont acheminés vers un poste de bouchage par l'intermédiaire de convoyeurs en forme de goulottes. Un tel transport des bouchons vers le poste de bouchage nécessite que ces derniers soient tous impérativement correctement orientés pour pouvoir être montés automatiquement sur lesdites bouteilles. En effet, à la sortie des convoyeurs en forme de goulottes, aux postes de bouchage, les bouchons doivent être positionnés auxdits postes de bouchage avec leur moyen de montage sur le goulot des bouteilles parfaitement orientés en direction de ces derniers, afin d'éviter tout risque d'arrêt d'une chaîne de production.

Ce problème est d'une acuité particulière en présence de bouchons, dont la hauteur est supérieure au diamètre et qui peuvent, éventuellement, se présenter dans les convoyeurs avec une orientation coaxiale par rapport à l'axe longitudinal, de sorte qu'il ne peuvent être montés et bloquent totalement l'installation.

La présente invention a pour but de pallier ces inconvénients en proposant un convoyeur muni d'un dispositif de séparation de bouchons mal orientés permettant de réaliser l'élimination automatique de tous les bouchons mal orientés, avant leur arrivée à un poste de bouchage et de garantir ainsi un fonctionnement sans heurt d'une installation de bouchage.

A cet effet, le convoyeur conforme à l'invention est **caractérisé en ce qu**'il est muni d'un dispositif de séparation de bouchons mal orientés, qui consiste en une ouverture longitudinale pratiquée partiellement dans un bord et dans la partie inférieure dudit convoyeur, sous forme d'une interruption partielle du guidage des bouchons dans ce dernier.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale d'un convoyeur conforme à l'invention ;
la figure 2 est une vue à plus grande échelle, en élévation latérale et en coupe du dispositif de séparation de bouchons mal orientés, en position de guidage et de maintien d'un bouchon correctement orienté, et
la figure 3 est une vue analogue à celle de la figure 2, représentant le dispositif en position de séparation d'un bouchon mal orienté.

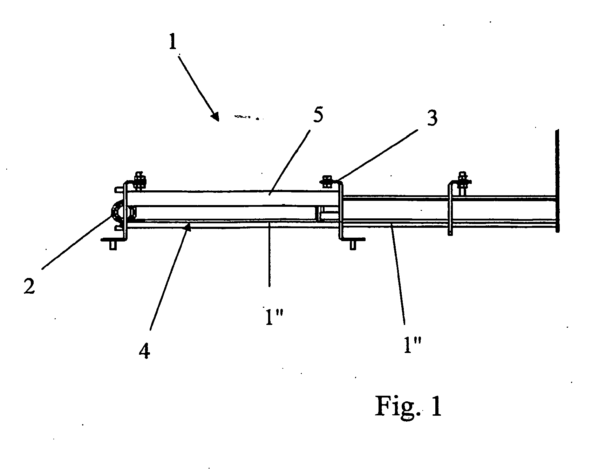

La figure 1 des dessins annexés représente un convoyeur 1 de bouchons 2, destiné à l'alimentation d'une machine en aval, telle qu'une machine de bouchage. Un tel convoyeur 1 de bouchons 2 peut être disposé entre un poste de nettoyage des bouchons et un poste de bouchage et il est impératif que les bouchons 2 déplacés dans ce convoyeur 1 de bouchons 2 soient parfaitement orientés pour leur pose sur le goulot des bouteilles dans le poste de bouchage. Pour le transport des bouchons 2 de manière orientée, le convoyeur 1 de bouchons 2, qui se présente sous forme d'un guidage tubulaire de section quadrangulaire, est constitué par un assemblage de profilés verticaux l'et horizontaux 1" fixés sur une infrastructure 3 de montage dans une ligne de production et dont au moins l'un des profilés horizontaux 1" est réglable en position. Un tel réglage en position d'un profilé de guidage horizontal 1", de préférence supérieur, permet une adaptation du guidage des bouchons 2 en fonction de leur diamètre, de telle façon que lesdits bouchons 2 soient toujours parfaitement en contact avec les profilés de guidage horizontaux 1" et soient donc entièrement maintenus.

Les profilés de guidage verticaux 1' peuvent, soit être fixés rigidement en position sur l'infrastructure 3, soit également, au moins pour l'un d'entre eux être réglables en position, afin de permettre une adaptation du guidage par les profilés de guidage verticaux l'en fonction de la hauteur des bouchons 2. Par ailleurs, le guidage de la partie inférieure des bouchons 2 est avantageusement réalisé par l'intermédiaire de deux profilés de guidage horizontaux 1".

Conformément à l'invention, le convoyeur 1 de bouchons 2 est muni d'un dispositif de séparation 4 de bouchons 2 mal orientés, qui consiste en une ouverture longitudinale pratiquée partiellement dans un bord et dans la partie inférieure dudit convoyeur 1 de bouchons 2, sous forme d'une interruption partielle du guidage des bouchons 2 dans ce dernier.

De préférence, le dispositif de séparation 4 de bouchons 2 mal orientés est ménagé près d'une extrémité du convoyeur 1 de bouchons 2 et l'interruption partielle du guidage des bouchons 2 dans ce dernier consiste en une découpe d'un profilé de guidage vertical l' et du profilé de guidage horizontal 1" adjacent à ce profilé de guidage vertical 1' d'une longueur légèrement supérieure à la longueur des bouchons 2 guidés dans le convoyeur 1 de bouchons 2, la partie supérieure de l'interruption partielle du profilé de guidage vertical l' étant remplacée par un profilé de maintien latéral supérieur 5 s'étendant sur une faible partie de la hauteur du profilé de guidage vertical 1' découpé, à partir de la partie supérieure de l'infrastructure 3. Ainsi, le dispositif de séparation 4 de bouchons 2 mal orientés délimite dans le convoyeur 1 de bouchons 2 un espace ouvert à travers lequel tous les bouchons 2 mal orientés tomberont forcément hors du convoyeur 1 de bouchons 2, alors que les bouchons correctement orientés resteront en contact, par la partie supérieure de leur face correspondant, avec le profilé de maintien latéral supérieur 5.

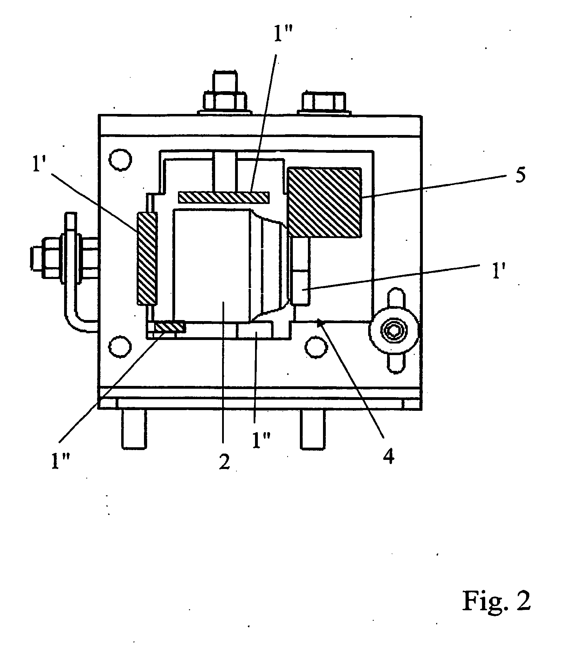

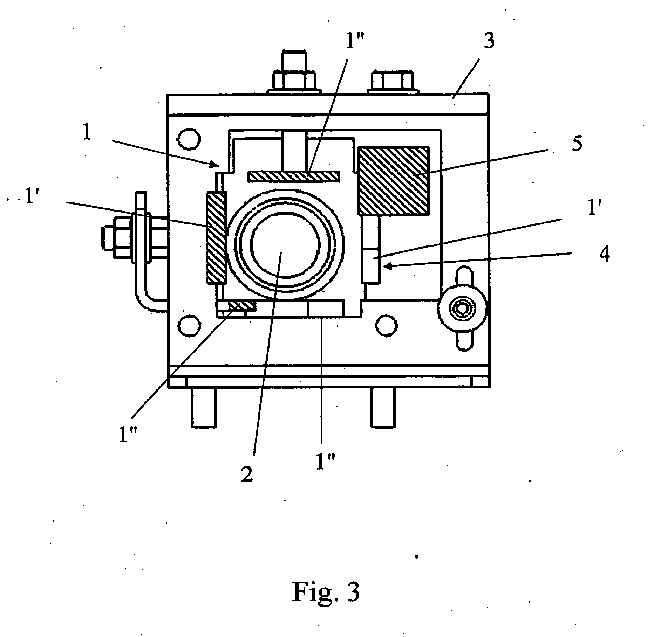

En effet, comme le montrent plus particulièrement les figures 2 et 3 des dessins annexés, en présence de bouchons correctement orientés (figure 2), ces bouchons s'appuient, pendant leur progression dans le convoyeur 1 de bouchons 2, par leurs faces avant et arrière contre les profilés de guidage verticaux l'et sont en contact par leurs génératrices inférieure et supérieure avec les guides horizontaux 1". A l'arrivée à hauteur du dispositif 4 de séparation de bouchons 2 mal orientés, les bouchons 2 correctement orientés restent en appui, d'une part, par l'une de leur face avec le profilé de guidage vertical 1' correspondant, d'autre part, par la partie supérieure de leur face opposée contre le profilé de maintien latéral supérieur 5 et, enfin, par leur génératrice inférieure sur le profilé de guidage horizontal 1" non découpé, situé près dudit profilé de guidage vertical 1' non découpé (figure 2). Ainsi, les bouchons 2, se présentant de manière correctement orientés devant le dispositif 4 de séparation de bouchons 2 mal orientés du convoyeur 1 de bouchons 2, restent parfaitement maintenus dans ce dernier et peuvent être acheminés vers le poste en aval, sans risquer de tomber à travers ledit dispositif 4.

Si un bouchon 2 mal orienté arrive à hauteur du dispositif 4 de séparation de bouchons 2 mal orientés du convoyeur 1 de bouchons 2 (figure 3), ce bouchon 2, qui déjà dans le convoyeur 1 n'était pas en contact avec toutes les faces des profilés de guidage verticaux 1' et horizontaux 1", ne repose plus sur le profilé de guidage horizontal 1" découpé et ne peuvent plus être en appui sur le profilé de guidage vertical l'également découpé. Il s'en suit que ce bouchon 2 est entièrement déséquilibré et quitte instantanément l'appui qu'il avait contre les deux profilés de guidage vertical l'et horizontal 1" subsistant au niveau du dispositif 4 de séparation de bouchons 2 mal orientés du convoyeur 1 de bouchons 2 pour tomber hors du convoyeur 1 dans un moyen (non représenté) de réception des bouchons 2 mal orientés.

Grâce à l'invention, il est donc possible d'effectuer un transfert de bouchon entre deux postes de travail en assurant de manière certaine une orientation correcte des bouchons à leur arrivée, ce par élimination de tous les bouchons mal orientés. Cette élimination est réalisée par mise en oeuvre d'un matériel simple et parfaitement fiable, de sorte que les coûts relatifs à la vérification de l'orientation sont très faibles.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Convoyeur (1) de bouchons (2), constitué par un assemblage de profilés verticaux (1') et horizontaux (1") fixés sur une infrastructure (3) de montage dans une ligne de production et dont au moins l'un des profilés horizontaux (1") est réglable en position, **caractérisé en ce qu'**il est muni d'un dispositif de séparation (4) de bouchons (2) mal orientés, qui consiste en une ouverture longitudinale pratiquée partiellement dans un bord et dans la partie inférieure dudit convoyeur (1) de bouchons (2), sous forme d'une interruption partielle du guidage des bouchons (2) dans ce dernier.

2. Convoyeur, suivant la revendication 1, **caractérisé en ce que** les profilés de guidage verticaux (1') sont fixés rigidement en position sur l'infrastructure (3).

3. Convoyeur, suivant la revendication 1, **caractérisé en ce que** l'un au moins des profilés de guidage verticaux (1') est réglable en position

4. Convoyeur, suivant la revendication 1, **caractérisé en ce que** le guidage de la partie inférieure des bouchons (2) est réalisé par l'intermédiaire de deux profilés de guidage horizontaux (1").

5. Convoyeur, suivant la revendication 1, **caractérisé en ce que** le dispositif de séparation (4) de bouchons (2) mal orientés est ménagé près d'une extrémité du convoyeur (1) de bouchons (2) et l'interruption partielle du guidage des bouchons (2) dans ce dernier consiste en une découpe d'un profilé de guidage vertical (1') et du profilé de guidage horizontal (1") adjacent à ce profilé de guidage vertical (1') d'une longueur légèrement supérieure à la longueur des bouchons (2) guidés dans le convoyeur (1) de bouchons (2), la partie supérieure de l'interruption partielle du profilé de guidage vertical (1') étant remplacée par un profilé de maintien latéral supérieur (5) s'étendant sur une faible partie de la hauteur du profilé de guidage vertical (1') découpé, à partir de la partie supérieure de l'infrastructure (3).

## Claims

1. Conveyor (1) of bottle stoppers (2) consisting of an assembly of vertical (1') and horizontal (1 ") sections fixed onto an assembly infrastructure (3) in a production line, of which at least one of the horizontal sections (1 ") can be adjusted in position, **characterised in that** it is provided with a device for separating (4) poorly oriented bottle stoppers (2), which consists of a longitudinal opening formed partially in one edge and in the lower part of said conveyor (1) of bottle stoppers (2) in the form of a partial interruption of the guiding of the bottle stoppers (2) in the latter.

2. Conveyor according to claim 1, **characterised in that** the vertical guiding sections (1') are fixed rigidly in position on the infrastructure (3).

3. Conveyor according to claim 1, **characterised in that** at least one of the vertical guiding sections (1') can be adjusted in position.

4. Conveyor according to claim 1, **characterised in that** the guiding of the lower part of the bottle stoppers (2) is formed by means of two horizontal guiding sections (1 ").

5. Conveyor according to claim 1, **characterised in that** the device (4) for separating badly oriented bottle stoppers (2) is arranged close to one end of the conveyor (1) of bottle stoppers (2) and the partial interruption of the guiding of the bottle stoppers (2) in the latter consists of a cut-out of a vertical guiding section (1') and horizontal guiding section (1") adjacent to said vertical guiding section (1') with a length slightly greater than the length of the bottle stoppers (2) guided in the conveyor (1) of bottle stoppers (2), the upper part of the partial interruption of the vertical guiding section (1') being replaced by an upper lateral support section (5) extending over a small part of the height of the vertical cut-out guiding section (1') from the upper part of the infrastructure (3).

## Patentansprüche

1. Fördervorrichtung (1) für Verschlusskappen (2), umfassend eine Anordnung von vertikalen Profilen (1') und horizontalen Profilen (1 "), welche auf einem Montage-Unterbau (3) in einer Fertigungslinie angeordnet sind und wobei mindestens eines der horizontalen Profile (1") in seiner Position einstellbar ausgebildet ist,
**dadurch gekennzeichnet, dass**
die Fördervorrichtung mit einer Vorrichtung zum Trennen (4) von falsch ausgerichteten Verschlusskappen (2) ausgestattet ist, welche eine Längsöffnung umfasst, die in Form einer teilweisen Unterbrechung der Führung der Verschlusskappen (2) in der Fördervorrichtung teilweise in einem Randbereich und in dem unteren Teil der Fördervorrichtung (1) für Verschlusskappen (2) ausgebildet ist.

2. Fördervorrichtung gemäß Anspruch 1,
**dadurch gekennzeichnet, dass**
die vertikalen Führungsprofile (1') in einer festen Position auf dem Unterbau (3) angeordnet sind.

3. Fördervorrichtung gemäß Anspruch 1,
**dadurch gekennzeichnet, dass**
zumindest eines der vertikalen Führungsprofile (1') in seiner Position verstellbar ist.

4. Fördervorrichtung gemäß Anspruch 1,
**dadurch gekennzeichnet, dass**
die Führung des unteren Teils der Verschlusskappen (2) durch zwei horizontale Führungsprofile (1 ") realisiert ist.

5. Fördervorrichtung gemäß Anspruch 1,
**dadurch gekennzeichnet, dass**
die Vorrichtung zum Trennen (4) von falsch ausgerichteten Verschlusskappen (2) nahe bei einem Ende der Fördervorrichtung (1) für Verschlusskappen (2) angeordnet ist und dass die teilweise Unterbrechung der Führung der Verschlusskappen (2) in letzterer einen Ausschnitt in einem vertikalen Führungsprofil (1') und in dem horizontalen Führungsprofil (1"), welches an dieses vertikale Führungsprofil (1') angrenzt, umfasst, wobei die Länge des Ausschnittes etwas größer ist als die Länge der Verschlusskappen (2), welche in der Fördervorrichtung (1) für Verschlusskappen (2) geführt sind, wobei der obere Abschnitt der teilweisen Unterbrechung des vertikalen Führungsprofils (1') durch ein oberes Seitenhalteprofil (5) ersetzt ist, welches sich ausgehend von dem oberen Bereich des Unterbaus (3) über einen geringen Teil der Höhe des ausgeschnittenen vertikalen Führungsprofils (1') erstreckt.
